# EUROPEAN PATENT APPLICATION

(11) **EP 3 246 688 A1**
(43) Date of publication of application: **22.11.2017**
(21) Application number: 16460031.4
(22) Date of filing: 19.05.2016
(51) Int. Cl.: G01M 13/02

(54) **A CONDITION MONITORING DEVICE AND A SYSTEM FOR THE CONDITION MONITORING OF INDUSTRIAL MACHINERY**

(71) Applicant: ABB Schweiz AG, 5400 Baden (CH)
(72) Inventor: Rzeszucinski, Pawel, 47-200 Kedzierzyn-Kozle (PL); Lewandowski, Daniel, 30-384 Krakow (PL); Rdzanek, Artur, 93-281 Lodz (PL); Konruff, Michael, Simpsonville, SC 29681 (US)
(74) Representative: Chochorowska-Winiarska, Krystyna

(57) **Abstract**

The subject of the invention is a condition monitoring device (1) and a system (101) for condition monitoring of industrial machinery applies in a diagnostic matter in industry. A device according to the invention comprises an enclosure (17) where an electronic system (2) with at least one sensor (11a) for measurement of physical quantities of the industrial machinery (20) is placed and the electronic system (2) is connected wirelessly with an external portable device (60). The system (2) comprises a sensor module (11) which is adapted for receiving and recording an analog signal from the sensor (11a); an analog/digital converter module (12), for converting an analog signal output into a digital signal; a processing module (13) for processing the digital signal; a memory module (14) for storing the signal outputs; a communication module (15) for wirelessly communicating the processed signal outputs or for communicating the raw, unprocessed data directly from the sensor module (11); an energy module (16) having an electrical connection with each of the modules (11,12,13,14,15) for energizing them during the operation time of the condition monitoring device (1). The all modules (11, 12, 13, 14, 15, 16) of the electronic system (2) are situated inside the rigid enclosure (17), which enclosure (17) is detachably fix to the industrial machinery (20) as a matching part of the industrial machinery (20) in such a way that the system (2) is placed entirely inside the body of the industrial machinery (20) or the enclosure (17) is an integral part of the industrial machinery (20).

## Description

### FIELD OF THE INVENTION

The subject of the invention is a condition monitoring device and a system for condition monitoring of industrial machinery applied in a diagnostic context in industry.

### BACKGROUND OF THE INVENTION

Typically condition monitoring of industrial machinery is performed with a number of sensors, often of different type, which ae typically mounted on the body of the machinery and which are connected with external data acquisition unit by means of cables. Many times these sensors e.g. accelerometers are relatively big and often protrude out of the machine. In many applications such external elements are prone to being damaged by people operating close to the monitored structure or, more generally, any activities being carried out in the closest proximity of the sensors. A good example is the mining industry where the amount of space is typically very limited. Another factor limiting the use of the standard sensor mounting locations (e.g. on the body of the monitored machine) is that the physical quantities which are to be measured often originate from places which are relatively far from the sensor itself. For example if a temperature sensor is mounted on the body of the monitored machine it may not be until the very advanced deterioration of the condition of the machine that the temperature, originating from e.g. a bearing, reaches the temperature sensor mounted on the housing of the bearing. This may often be too late to initiate any preventive actions. In addition to the above, also external sources of powering needed by the sensors often require long cables and dedicated infrastructure which increases both the cost and required effort to maintain the entire system. These limitations of the externally mounted sensors can be eliminated by the present invention.

From the US patent US4812826 there is a thermal sensor composed of a standard bolt which has been modified to embody a temperature sensing element and placed into a bearing assembly of a train. This element contains a heat-sensitive wax that expands at a pre-set temperature causing a displacement of a piston which, in turn, exposes projections. The projection may function as an antenna either passive (reflective) or active (transmitter) that can be probed from the wayside by means of a radio frequency signal.

From the European patent EP2013590 there is a railcar truck sensor interface mounted between a bearing adaptor and a side frame. The sensor interface comprises an on-board data processing unit for receiving and processing data from sensors and a communication adapter to transmit the processed data.

The disadvantages of the above mentioned approaches with respect to the application which is the subject of this invention, are that the presented devices are capable of providing only simple information, often of Boolean nature (failure/no failure) which is not indicative of detailed element condition; or they output signals often only from a single sensor, dedicated to measuring a single physical quantity; or the sensors need to be located between two surfaces, otherwise not being able to function correctly.

### STATEMENT OF THE PROBLEM

In the field of machinery condition monitoring the sensors used to measure given physical quantities are often mounted so that they protrude out of the machine structure and are prone to being damaged. Also very often the distance between the place where the sensors are mounted and the place from which the measured physical quantity originates is too big for an incipient fault to be detected and, as a result, quick and efficient preventive actions to be implemented. In addition great majority of devices require external sources of powering which can only be delivered by means of long cables fixed within a dedicated infrastructure adding to the cost and complexity of setting up and maintaining such an arrangement.

The present invention overcomes this problem by being a wireless, self-contained device which can be integrated with the monitored machine in such a way that none of the elements of the device are a non-integral, external part of the machine, and by such are no longer prone to external damage.

### SUMMARY OF THE INVENTION

An essence of the condition monitoring device for an industrial machinery, comprising an enclosure where an electronic system with at least one sensor for measurement of physical quantities of the industrial machinery is placed, and the electronic system is connected wirelessly with an external portable device, where the electronic system comprises a sensor module which is adapted for receiving and recording an analog signal from the sensor, and for transmitting a signal output to the other modules, where the other modules are formed by: an analog/digital converter module, for converting an analog signal output recorded by each sensor module into a digital signal; a processing module for processing the digital signal of at least one measured physical quantity from at least one sensor module; a memory module for storing the signal output from at least one sensor module and for storing the signal output generated by the processing module; a communication module for wirelessly communicating the processed signal output of the processing module or communicating the raw, unprocessed data directly from the sensor module, which communication module is adapted for communication the device with any of an external communication device; an energy module having an electrical connection with each of the rest of the modules for energizing them during the operation time of the condition monitoring device. The all modules of the electronic system are situated inside the rigid enclosure, which enclosure is detachably fix to the industrial machinery as a matching part of the industrial machinery in such a way that the electronic system is placed entirely inside the body of the industrial machinery or the enclosure is an integral part of the industrial machinery.

Preferably the enclosure has a form of a mounting screw which is situated in a body of the industrial machinery connecting the body with a base of the industrial machinery.

Alternatively the enclosure has a form of a profiled box which is inserted in a the standard housing of the industrial machinery in such a way that the box is not protruding from the body of the machinery.

Preferably the external communication device is a mobile phone, a tablet, a Personal Digital Assistant PDA or any type of portable personal computing device.

Preferably the industrial machinery is a motor, a bearing, a pump, a compressor, a transformer or any machinery suited for industrial applications.

The essence of the condition monitoring system is that, the system comprises at least one a condition monitoring device according to claims 1-5; wirelessly connected with at least one external portable device for triggering the operation of the condition monitoring device and receiving signal outputs from the condition monitoring device. The external portable device is connected with at least one external database for storing information received from the external device.

Preferably the system comprises at least two condition monitoring devices according to claims 1-5, and between each of the condition monitoring device and the external portable device and between the external database a common gateway is wirelessly inserted, adapted for receiving signal outputs from condition monitoring devices and for transferring signals to the external portable device and to the external database.

Alternatively the system comprises at least two condition monitoring devises according to claims 1-5, and between each of the condition monitoring device and the external portable device and between the external database a gateway is wirelessly inserted, adapted for receiving signal outputs from devices and for transferring signals to the external portable device and the external database and adapted for sending data from the external database.

Use of a condition monitoring device for an industrial machinery, according to the invention being characterized by the fact that is applied as a part of the industrial machinery and has the electronic system comprising a sensor module which is adapted for receiving and recording an analog signal from the sensor, and for transmitting a signal output to the other modules, where the other modules are formed by: an analog/digital converter module, for converting an analog signal output recorded by each sensor module into a digital signal; a processing module for processing the digital signal of at least one measured physical quantity from at least one sensor module; a memory module for storing the signal output from at least one sensor module and for storing the signal output generated by the processing module; a communication module for wirelessly communicating the processed signal output of the processing module or communicating the raw, unprocessed data directly from the sensor module, which communication module is adapted for communication the device with any of an external communication device; an energy module having an electrical connection with each of the rest module for energizing them during the operation time of the condition monitoring device. The all modules the electronic system are situated inside the rigid enclosure, which enclosure is detachably fix to the industrial machinery as a matching part of the industrial machinery in such a way that the electronic system is placed entirely inside the body of the industrial machinery or the enclosure is an integral part of the industrial machinery.

Preferably the use is characterised by the fact that said enclosure has a form of a mounting screw which is situated in a body of the industrial machinery connecting the industrial machinery with a base element of the industrial machinery.

Preferably the use is characterised by the fact that said enclosure has a form of a profiled box which is inserted in a the standard housing of the industrial machinery in such a way that that the box is not protruding from the body of the machinery.

Preferably the use is characterized in that the industrial machinery is a motor, a bearing, a pump, a compressor, a transformer or any machinery suited for industrial applications.

Preferably the use is characterized in that the external communication device is a mobile phone, a tablet, a Personal Digital Assistant PDA or any type of portable personal computing device.

### ADVANTAGES OF THE INVENTION

The most distinctive advantage of the invention is the miniaturization of the condition monitoring device. Another advantage of the present invention is that it allows for all the components necessary to perform acquisition of signals of different physical quantities to be entirely integrated with the enclosure of the machinery, the condition of which is to be monitored. By that, the entire electronic system is protected against any destructive interactions with people working or processes taking place in the closest proximity to the device. In addition to that the fact that the enclosure of the condition monitoring device can be either constructed to be an integral, no detachable part of the machine, placed in the optimal location for the given fault detection or as a detachable part which is specifically designed to accommodate the device which is the subject of the proposed invention makes the subject of the proposed invention applicable to virtually any machine. This is further supported by the fact that the condition monitoring device contains at least one sensor module which can contain a sensor of the required type which allows for the device to be streamlined for the needs of the required application field. Another advantage of the present invention is that the proposed device is a self-contained unit which does not require any input (energy, control, tuning) from outside of the machinery in order to be fully operational. In addition the proposed invention has a build-in intelligence capable of processing the recorded data on-board and by that providing access not only to raw data (if needed) but to already derived condition monitoring metrics informing about the detailed condition of the monitored machinery. Another advantage is that the communication module allows the information to be transferred to an external device e.g. a mobile phone and by that it can be accessed with the use of an everyday use tool, without a need of any dedicated hardware. Also one embodiment of the proposed invention allows the data from a number of condition monitoring devices to be wirelessly transferred to a common gateway and further transferred externally for further processing or reporting or storage (or all of the above). By integrating the proposed device with the body of the monitored machine, the sensors can be located extremely close to the origin of the potential fault, decreasing the time needed to take relevant, preventive actions. In addition the device has a powerful embedded intelligence system which allows for certain condition monitoring information to be extracted from the measured signals on-board the device. Apart from the device, the present invention also comprises a condition monitoring system which utilizes the communication capabilities of the device and allows for the results of the analysis performed on the device, but also the raw data recorded by the device, to be transmitted to an external device e.g. a mobile phone, for visualization and, if required, additional analysis.

### DESCRIPTION OF THE DRAWINGS

A more comprehensive description of the invention in an exemplary embodiment is presented in the drawings, where:
Figure 1 shows a schematic diagram of a condition monitoring device,
Figure 2 shows the first application of a condition monitoring device from Figure1,
Figure 3 shows the second application of a condition monitoring device from Figure 1,
Figure 4 shows a block diagram of the condition monitoring system in the first embodiment of the invention,
Figure 5 shows a block diagram of the condition monitoring system in the second embodiment of the invention,
Figure 6 shows a block diagram of the condition monitoring system in the third embodiment of the invention.

### DETAILED DESCRIPTION OF THE INVENTION

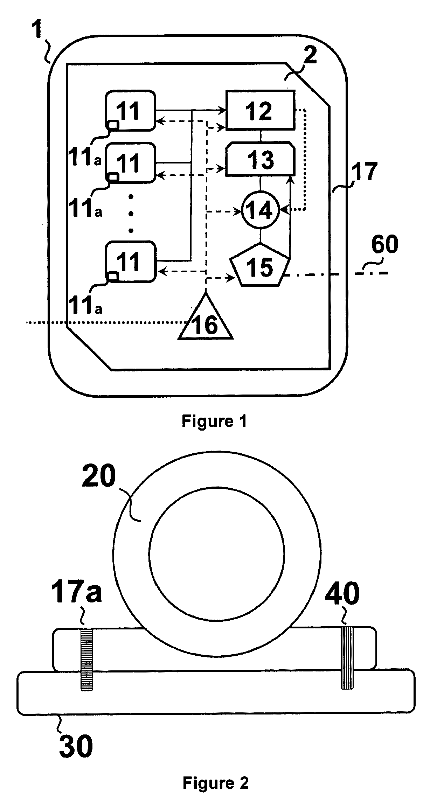

Figure 1 shows a condition monitoring device according to an embodiment of the present invention. The condition monitoring device 1 comprises an electronic system 2 having at least one sensor module 11, a converter module 12, a processing module 13, a memory module 14, a communication module 15 and an energy module 16, connected together. Each sensor module 11 contains a single sensor 11a for measuring parameters of strictly determined physical quantity. Different sensor modules 11 can contain sensors of the same type e.g. two sensor modules containing an accelerometer each; they may as well be each of different types e.g. first sensor module 11 with an accelerometer, second sensor module 11 with a thermometer, third sensor module 11 with magnetometer, any sensor module with other measuring sensor like microphone, mini infrared camera, etc. Each sensor module 11 is dedicated to record signals measured by sensors 11a of strictly determined physical quantity e.g. vibration, temperature, magnetic field, etc. The signal output recorded by each sensor module 11 is send to the analog-digital converter module 12 for converting an analog signal output into a digital signal output which can be processed by other modules. Once digitized the signal outputs are send to the processing module 13 where the processing of the signal outputs takes place. In a typical situation the processing module 13 may calculate some Key Performance Indicators (KPIs) based on the digitized data e.g. it could derive Root Mean Square from vibration signal, it could calculate the rate of change of the temperature compared with historical values (stored internally) or it could compare the intensity of the magnetic field against a pre-set threshold value. The KPIs may be calculated on a periodic basis e.g. once every hour, or only after being triggered by a signal from an external portable device 60 e.g. a mobile phone. The signal outputs generated in the processing module 13 are send to the memory module 14. The memory module 14 may store a history of past signal outputs from the processing module 13 allowing for trends to be generated or it may store only the last signal output, every time discarding the previous entries. The memory module 14 may also store information which is hardcoded during manufacturing about the monitored element e.g. nameplate details or maintenance manuals. It may be an optional functionality of the condition monitoring device, shown in Figure 1 in dotted line, that the signal outputs which are digitized in the analog-digital converter module 12 are directly send to the memory module 14, bypassing the processing module 13. The memory module 14 may store a history of past signal outputs from the analog-digital converter module 12 or it may store only the last output, every time discarding the previous entries. It may also be possible that the signal outputs from the analog-digital converter module 12 are send to both the processing module 13 for processing as well as to the memory module 14 for storage. In such an arrangement the memory module 14 may store both the information, for example KPI indicators values as well as the signal outputs from the analog-digital converter module 12. The memory module 14 is connected with a communication module 15 used for communication between the device 1 with an external portable device 60 e.g. a mobile phone. The communication module 15 is also adapted for receiving information sent by an external portable device 60. Such information may contain details about the type of analysis that should be performed on the signal outputs_from the analog-digital converter module 12, and if so, this information may be fed back to the processing module 13 for processing the signal outputs signals according to rules delivered with the information. Figure 1 also shows an energy module 16 for providing energy required by all the other modules of the condition monitoring device 1 (the energy distribution shown in Figure 1 in dashed line). In the preferred embodiment the energy module 16 contains a long-life battery which ascertains the full functionality of the condition monitoring device 1 for a period of time which is guaranteed not to be less than a given value, dependant on the characteristics of the battery e.g. its size. It may be an optional functionality of the energy module 16, shown in Figure 1 in dotted line, to accept external sources of energy from e.g. an energy harvesting system. In such arrangement the energy consumed by the condition monitoring device 1 may be entirely provided by the external source of energy. Alternatively the battery may be used as the primal source of energy and be continuously recharged by the energy originating from the energy harvesting arrangement. The electronic system 2 with all its accompanying modules (11, 12, 13, 14, 15, 16) is embedded in a rigid enclosure 17 of the condition monitoring device 1.

In the first embodiment of the invention (Figure 2) the enclosure 17 of the condition monitoring device 1 has a form of a screw 17a (represented by horizontal lines) and it is used as a part of the machine assembly. The screw 17a is used to mount the body of the industrial machinery 20 to the base element 30 of the machinery. Figure 2 also shows a standard screw 40 (represented by vertical lines) which is also used to mount the industrial machinery 20 to the base element 30, which is typically realised in the most common mounting arrangement. The advantage of such screw 17a is that the condition monitoring device 1 can be easily detached from the structure of the industrial machinery 20 when a replacement or an upgrade of it is needed. The screw 17a is not protruding from the body of the machinery 20.

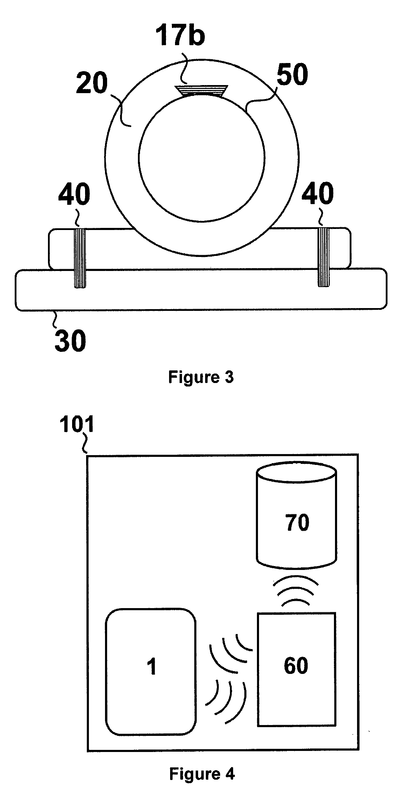

In the second embodiment of the invention (Figure 3), the enclosure 17 is an integral part of the machine and has a form of a profiled box 17b placed inside of the machinery 20, during the machinery assembly stage in a factory. The enclosure 17b is an element which is integrated with the body of the industrial machinery other than its base 30. The profiled box 17b is matched with the recess made in the machinery 20, not presented in the drawing, in such a way that the box 17b is not protruding from the body of machinery. The enclosure 17 may be carried out as an integral part of the industrial machinery 20. For example in a bearing, the enclosure 17b is inserted in a standard housing 50 being a part of an outer race of the bearing. The advantage of such an arrangement is that the condition monitoring device 1 can be situated in the location which is optimal for the detection of the given fault type - in this example for the detection of the bearing outer race fault.

Apart from the condition monitoring device 1 the presented invention also refers to a related condition monitoring system 101 (101a, 101b) comprising the condition monitoring device 1 according to any embodiments of the present invention. Figure 4 shows a condition monitoring system 101 in the first embodiment of the system. A condition monitoring system 101 uses the condition monitoring device 1 and an external portable device 60 e.g. a mobile phone, the two being connected wirelessly. The condition monitoring device 1 and the external portable device 60 are capable to communicate by means of the wireless connection and the communication is bidirectional i.e. both elements can transmit and receive information. The data transmitted by the communication module 15 of the condition monitoring device 1 may include Key Performance Indicators (KPIs) derived in the processing module 13 or data from the analog-digital conversion module 12, both data stored in memory module 14. Information transmitted by the external portable device 60 may contain information regarding e.g. the type of KPI to be extracted or it may contain a trigger signal for the condition monitoring device 1 to perform certain action e.g. ad-hoc measurement. The condition monitoring system 101 comprises also an external database 70 capable of storing the KPIs or signal outputs obtained from the communication module 15 of the condition monitoring device 1. The information can be transferred wirelessly to the external database 70 via the external portable device 60.

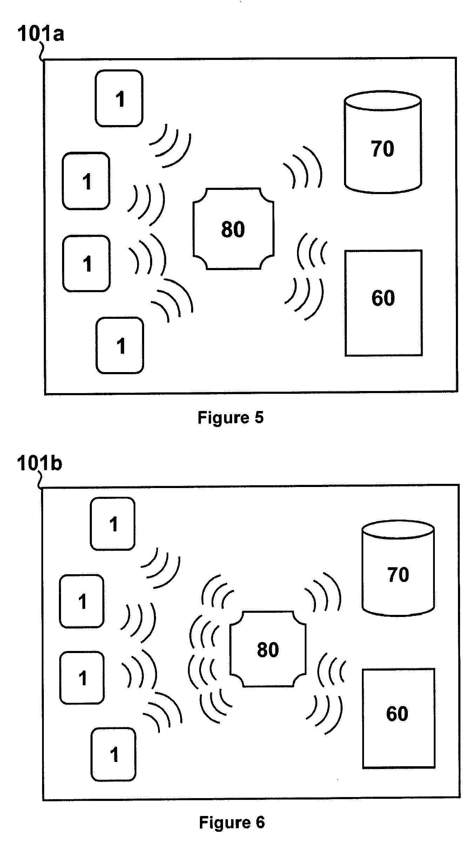

Figure 5 shows a condition monitoring system 101a in the second embodiment of the system according to an embodiment of the present invention. In such system at least two condition monitoring devices 1 are present and so a user willing to read the information from each of the condition monitoring devices 1 sets-up a common gateway 80 for collecting information from all the condition monitoring devices 1 and for sending/receiving the data to/from the external portable device 60 . The common gateway 80 transfers all the information to the external portable device 60. The information may be transferred between each condition monitoring device 1 and the common gateway 80 at a regular, predefined time intervals. If so, then the communication between each condition monitoring device 1 and the common gateway 80 is unidirectional i.e. only the condition monitoring devices 1 can send data to the common gateway 80, without communication in the other direction. The common gateway 80 in turn has the capability of transferring the data to an external portable device 60 but also accepting signal outputs from an external portable device 60. The signal outputs from an external portable device 60 to the gateway carry information about the type of data to be transferred and when the transfer takes place. The common gateway 80 also transfers the data to an external database 70 capable of storing the KPIs or signal outputs originating from the communication module 15 of each of the condition monitoring device 1.

Another, third embodiment of the condition monitoring system 101b related to the condition monitoring device 1 according to an embodiment of present invention is depicted in Figure 6. The only difference between such system and system presented in Figure 5, is that the common gateway 80, having received signal outputs from external portable device 60 containing information about the type of the data to be transferred, can send the same information to each condition monitoring device 1 expecting to receive only the specified data. After receiving the data from all the condition monitoring devices 1 the common gateway 80 transmits the data to the external portable device 60. In such an arrangement the communication both between each condition monitoring device 1 and the common gateway 80 as well as between the common gateway 80 and the external portable device 60 is bidirectional.

In all embodiments of the invention the device 1 and the system 101 is used for the industrial machinery being a motor, a bearing, a gearbox, a pump, a compressor, a transformer or any machinery suited for industrial applications.

## Claims

1. A condition monitoring device (1) for an industrial machinery (20), comprising an enclosure (17) where an electronic system (2) with at least one sensor (11a) for measurement of physical quantities of the industrial machinery (20) is placed, and the electronic system (2) is connected wirelessly with an external portable device (60), **characterized in that** the system (2) comprises a sensor module (11) which is adapted for receiving and recording an analog signal from the sensor (11a), and for transmitting a signal output to the other modules, where the other modules are formed by: an analog-digital converter module (12), for converting an analog signal output recorded by each sensor module (11) into a digital signal; a processing module (13) for processing the digital signal of at least one measured physical quantity from at least one sensor module (11); a memory module (14) for storing the signal output from at least one sensor module (11) and for storing the signal output generated by the processing module (13); a communication module (15) for wirelessly communicating the processed signal output of the processing module (13) or communicating the data directly from the analog-digital converter module (12), which communication module (15) is adapted for communication the device (1) with the external portable device (60); an energy module (16) having an electrical connection with each of the modules (11, 12, 13, 14, 15) for energizing them during the operation time of the condition monitoring device (1); and all modules (11, 12, 13, 14, 15, 16) of the electronic system (2) are situated inside the rigid enclosure (17), which enclosure (17) is detachably fixed to the industrial machinery (20) as a matching part of the industrial machinery (20) in such a way that the system (2) is placed entirely inside the body of the industrial machinery (20) or the enclosure (17) is an integral part of the industrial machinery (20).

2. A device according to claim 1, **characterized in that** the enclosure (17) has a form of a mounting screw (17a) which is situated in a body of the industrial machinery (20) connecting the industrial machinery (20) with a base (30) of the industrial machinery (20).

3. A device according to claim 1, **characterized in that** the enclosure (17) has a form of a profiled box (17b) which is inserted in a the standard housing (50) of the industrial machinery (20) in such a way that the box (17b) is not protruding from the body of the machinery (20).

4. A device according to claims 1-2, **characterized in that** the an external portable device (60) is a mobile phone, a tablet, a Personal Digital Assistant PDA or any type of portable personal computing device.

5. A device according to any previous claims, **characterized in that** the industrial machinery (20) is a motor, a bearing, a gearbox, a pump, a compressor, a transformer or any machinery suited for industrial applications.

6. A condition monitoring system (101) **characterized in that** it comprises at least one condition monitoring device (1) according to claims 1-5; wirelessly connected with at least one external portable device (60) for triggering the operation of the condition monitoring device (1) and receiving signal outputs from the condition monitoring device (1), which external portable device (60) is connected with at least one external database (70) for storing information received from the external portable device (60).

7. A system according to claim 6, **characterised in that** it comprises at least two condition monitoring devices (1) according to claims 1-5 and between each of the condition monitoring device (1) and the external portable device (60) and between the external database (70) a common gateway (80) is wirelessly inserted, adapted for receiving signal outputs from condition monitoring devices (1) and for transferring signals to the external portable device (60) and to the external database (70).

8. A system according to claim 6, **characterised in that** it comprises at least two condition monitoring devises (1) according to claims 1-5 and between each of the condition monitoring device (1) and the external portable device (60) and between the external database (70) a common gateway (80) is wirelessly inserted, adapted for receiving signal outputs from condition monitoring devices (1) and for transferring signals to the external portable device (60) and the external database (70) and adapted for sending data from the external portable device (60) to condition monitoring devices (1).

9. Use of a condition monitoring device (1) for an industrial machinery, comprising an enclosure (17) where an electronic system (2) with at least one sensor (11 a) for measurement of physical quantities of the industrial machinery (20) is placed, **the said use being characterized by the fact that is applied as a part of the industrial machinery (20) and** the electronic system (2) comprises a sensor module (11) which is adapted for receiving and recording an analog signal from the sensor (11 a), and for transmitting a signal output to the other modules, where the other modules are formed by: an analog-digital converter module (12), for converting an analog signal output recorded by each sensor module (11) into a digital signal; a processing module (13) for processing the digital signal of at least one measured physical quantity from at least one sensor module (11); a memory module (14) for storing the signal output from at least one sensor module (11) and for storing the signal output generated by the processing module (13); a communication module (15) for wirelessly communicating the processed signal output of the processing module (13) or communicating the data directly from the analog-digital converter module (12), which communication module (15) is adapted for communication the device (1) with any of external communication devices; an energy module (16) having an electrical connection with each of the modules (11, 12, 13, 14, 15) for energizing them during the operation time of the condition monitoring device (1); and all modules (11, 12, 13, 14, 15,16) of the electronic system (2) are situated inside the rigid enclosure (17), which enclosure (17) is detachably fixed to the industrial machinery (20) as a matching part of the industrial machinery (20) in such a way that the system (2) is placed entirely inside the body of the industrial machinery (20) or the enclosure (17) is an integral part of the industrial machinery (20).

10. Use in accordance with claim 9, **characterised by** the fact that said enclosure (17) has a form of a mounting screw (17a) which is situated in a body of the industrial machinery (20) connecting the industrial machinery (20) with a base (30) of the industrial machinery (20).

11. Use in accordance with claim 9, **characterised by** the fact that said enclosure (17) has a form of a profiled box (17b) which is inserted in a the standard housing (50) of the industrial machinery (20) in such a way that the box (17b) is not protruding from the body of the machinery (20).

12. Use in accordance with claim 9-11, **characterized in that** the industrial machinery (20) is a motor, a bearing, a gearbox, a pump, a compressor, a transformer or any machinery suited for industrial applications.

13. Use in accordance with claim 9-11, **characterized in that** the external portable device (60) is a mobile phone, a tablet, a Personal Digital Assistant PDA or any type of portable personal computing device.
